# EUROPÄISCHE PATENTSCHRIFT

(11) **EP 4 078 226 B1**
(45) Veröffentlichungstag und Bekanntmachung des Hinweises auf die Patenterteilung: **07.02.2024**
(21) Anmeldenummer: 21805934.3
(22) Anmeldetag: 03.11.2021
(51) Int. Cl.: G01S 11/08

(54) **VERFAHREN ZUR FUNKBASIERTEN ENTFERNUNGSMESSUNG**
METHOD FOR RADIO-BASED DISTANCE MEASUREMENT
MÉTHODE DE MESURE DE LA DISTANCE PAR RADIO

(30) Priorität: 04.11.2020 WO PCT/EP2020/081016
(43) Veröffentlichungstag der Anmeldung: 26.10.2022
(73) Patentinhaber: Lambda: 4 Entwicklungen GmbH, 22299 Hamburg (DE)
(72) Erfinder: REIMANN, Rönne, 22769 Hamburg (DE)
(74) Vertreter: Raffay & Fleck
(86) Internationale Anmeldenummer: PCT/EP2021/080519
(87) Internationale Veröffentlichungsnummer: WO 2022/096510

(56) Entgegenhaltungen:
- EP-A1- 3 564 706
- WO-A1-2009/067997
- WO-A1-2012/155993

## Beschreibung

Die Erfindung betrifft ein Verfahren zur funkbasierten Entfernungsmessung.

Es ist bekannt, aus dem Austausch von Funksignalen zwischen zwei Objekten die Entfernung zwischen den Objekten zu bestimmen.

Auch ist es bekannt, Zeitgeber in zwei Objekten zu synchronisieren, sowohl über kabelgebundene als auch kabellose Verbindungen. So existiert beispielsweise das NTP Protokoll. Auch ist im Rahmen einer Bluetoothverbindung eine Synchronisation vorgesehen, in der jedes Objekt eine frei laufende 28 bit Uhr mit einem Takt von 3,2 kHz aufweist und jedes Objekt sein Offset zu einer Zentralen Uhr ermittelt und diesen regelmäßig korrigiert. Hier wird eine Synchronisation mit einer Genauigkeit von etwa 125 ns erreicht. Auch ist eine verbesserte Zeitsynchronisation bekannt, beispielsweise aus der DE112014004426T5 oder "Synchronization in Wireless Sensor Networks Using Bluetooth", Casas et al., Third International Workshop on Intelligent Solutions in Embedded Systems, 2005., ISBN: 3-902463-03-1. Dies kann beispielsweise zur Energieeinsparung genutzt werden, indem ein Objekt nur zu bestimmten Zeitschlitzen empfangsbereit gehalten wird, die dem anderen Objekt bekannt sind, um zu entsprechenden Zeiten zu senden. Die Synchronisation der Uhren ist auch zumindest bei einseitiger relativ starker Störung des Funkkanals noch möglich, wobei die Entfernungsmessung bei derartigen Störungen unmöglich oder sehr ungenau wird oder sehr viel Zeit benötigt. Klar von der Genauigkeit einer Zeitsynchronisation zu unterscheiden ist die Synchronisation auf einen Takt eines empfangenen Signals am Empfänger des Signals. Hier findet keine Synchronisation zweier Uhren an zwei Objekten statt, sondern wird das empfangene Objekt so eingestellt, dass es mit dem eingehenden Signal synchronisiert ist. Dabei spielt die Signallaufzeit keine Rolle, da dafür unbeachtlich ist, wann das Signal gesendet wurde und/oder wie lange es zur Übertragung benötigt hat.

Auch ist es bekannt mit mathematischen Methoden wie CAPON oder MUSIK eine Entfernung aus einer Autokorrelationsmatrix eines Signalrundlaufes zu berechnen.

Dabei werden die Phasenverschiebungen von Signalhin und Signalrücklauf, in der Regel nach näherungsweiser Korrektur eines 180° Mehrdeutigkeitsproblems, addiert. Aus den dadurch und eine Bestimmung einer Amplitude erstellten komplexen Messwerten wird dann eine Autokorrelationsmatrix erstellt, auf deren Basis dann eine Entfernung berechnet wird.

Aus der EP 3 564 706 A1 ist ein Verfahren zur Abstandbestimmung zwischen zwei Objekten nach dem Oberbegriff des Anspruch 1 bekannt, bei dem eine Autokorrelationsmatrix aus den Messungen an den am zweiten Objekt empfangenen Signalen des ersten Objekts und aus den Messungen an den am ersten Objekt empfangenen Signalen des zweiten Objekts gebildet wird, und auf Basis dieser einen Autokorrelationsmatrix die Entfernung zwischen erstem und zweitem Objekt berechnet wird.

Es ist zur Beschleunigung der Bestimmung des Abstandes und/oder zur Erhöhung der Genauigkeit der Bestimmung des Abstandes zwischen zwei Objekten und/oder bei Störung des Empfangs wünschenswert, die Abstandsbestimmung störungsunanfälliger durchzuführen. Es ist Aufgabe der vorliegenden Erfindung die Abstandsbestimmung zu beschleunigen, mit höherer Genauigkeit zu ermöglichen und/oder auch bei, insbesondere jeweils einseitiger und/oder asymmetrischer, Störung der Funkverbindung zu ermöglichen oder zu verbessern.

Der Erfinder hat überraschend festgestellt, dass zwischen zeit- und/oder taktsynchronisierten Objekten, insbesondere bei phasenkohärentem Frequenzwechsel, eine Aggregation, insbesondere Aufsummierung, der für jeweils eine Übertragungsrichtung ermittelten Autokorrelationsmatrizen zu einer deutlich verbesserten Störungsunanfälligkeit führt, insbesondere bei Störungen, die an beiden Objekten unterschiedlich ausgeprägt sind, was in der Regel der Fall ist. Dies sorgt auch dafür, dass ohne Genauigkeitsverzicht, ein Frequenzhopping eines Objekts gefolgt von einem Frequenzhopping eines zweiten der Objekte durchgeführt werden kann, anstelle die Sender- und Empfängerrolle häufig zu wechseln. Auch kann bei mehreren Objekten, die ihren Abstand untereinander bestimmen sollen, jedes Objekt nacheinander ein Frequenzhopping durchführen und können die AKMs der Messungen an den einzelnen Objekten paarweise aggregiert werden.

Unter einem Frequenzhopping ist insbesondere das aufeinander folgende Senden auf unterschiedlichen Frequenzen zu verstehen. Dies sorgt für eine schnellere Messung, da auch Umschaltzeiten der Transceiver weitgehend verzichtet werden kann und ermöglicht die Entfernungsbestimmung auch bei starker Störung des Funkkanals. Zudem ermöglich es, eine Vielzahl von Objekten die Entfernungen untereinander schnell und genau zu bestimmen, da das Frequenzhopping eines jeden der Objekte von allen anderen der Objekten zur Entfernungsbestimmung genutzt werden kann.

Gelöst wird die Aufgabe durch ein Verfahren zur Abstandsbestimmung, insbesondere basierend auf Phasenlaufzeiten oder phase based ranging (PBR) und insbesondere nicht auf Basis von Pulslaufzeiten ToF zwischen zwei oder mehreren Objekten, wobei die Objekte, insbesondere auf 10ns oder besser, insbesondere im Bereich zwischen 10ns und 100ps, zeit- und/oder taktsynchronisiert sind oder werden und wobei ein erstes und/oder zweites der zwei Objekte auf mehreren Frequenzen Signale abstrahlt und das zweite und/oder erste der zwei Objekte diese Signale empfängt und daraus sowie insbesondere der Kenntnis über die Zeitpunkte der Abstrahlung von Merkmalen der Signale, insbesondere mindestens einem Merkmal pro Frequenz und/oder pro Signal, also beispielsweise des Zeitpunktes der Umschaltung auf die Frequenz oder des Beginns des Sendens der Frequenz, die Entfernung zwischen erstem und zweitem Objekt bestimmt wird. Dabei senden mindestens zwei Objekte nacheinander, insbesondere unmittelbar nacheinander. So kann zuerst nur das erste Objekt senden und das zweite oder mehrere Objekte die Signale des ersten empfangen und anschließend das zweite Objekt senden und das erste oder mehrere Objekte die Signale des zweiten empfangen.

Gekennzeichnet ist das Verfahren durch die Bildung einer, insbesondere komplexen, ersten Autokorrelationsmatrix der Messungen, worunter auch korrigierte Messungen, zum Beispiel zur Kompensation der Zeitdrift zwischen den Zeitgebern der zwei Objekte, zu verstehen sind, an den am zweiten Objekt empfangenen Signalen des ersten Objekts und die Bildung einer, insbesondere komplexen, zweiten Autokorrelationsmatrix der Messungen, worunter auch korrigierte Messungen, zum Beispiel zur Kompensation der Zeitdrift zwischen den Zeitgebern der zwei Objekte, zu verstehen sind, an den am ersten Objekt empfangenen Signalen des zweiten Objekts. Dazu wird in der Regel jeweils ein Messwertvektor der Messungen als komplexer Vektor gebildet und dessen Autokorrelationsmatrix berechnet. Dabei handelt es sich insbesondere um Messungen über nur die einfache Entfernung zwischen den Objekten. So beinhaltet der Messwertvektor der am zweiten Objekt empfangenen Signalen des ersten Objekts insbesondere nur komplexe Zahlen aus den Messungen der am zweiten Objekt empfangenen Signalen des ersten Objekts und nicht eine Aggregation von Messungen des Hin- und Rückwegs, wie dies im Stand der Technik hingegen üblich ist.

Das Verfahren ist weiter gekennzeichnet durch die Aggregation der ersten und zweiten Autokorrelationsmatrix zu einer aggregierten, insbesondere komplexen, Autokorrelationsmatrix, insbesondere durch Summenbildung, sowie die Berechnung der Entfernung zwischen erstem und zweitem Objekt auf Basis der aggregierten Autokorrelationsmatrix.

Gelöst wird die Aufgabe auch durch eine Verwendung einer aus mindestens zwei Autokorrelationsmatrizen aggregierten, insbesondere aufsummierten, Autokorrelationsmatrix zur Bestimmung einer Entfernung zwischen zwei Objekten, wobei jedes der Objekte auf mehreren Frequenzen Signale abstrahlt, insbesondere ein Frequenzhopping durchführt, und das jeweils andere Objekt diese Signale empfängt und aus den Messungen von Phase und Amplitude oder Phase und Leistung mindestens ein komplexer Vektor des Empfang jedes Objekts erstellt wird, also mindestens ein erster Vektor des am ersten Objekt Empfangenen und mindesten ein zweiter Vektor aus dem am zweiten Objekt Empfangenen und aus dem mindestens einen ersten und zweiten komplexen Vektor jeweils eine der mindestens zwei Autokorrelationsmatrizen erstellt wird.

Mit besonderem Vorteil wechseln das erste und/oder zweite Objekt zwischen mindestens zwei der mehreren Frequenzen phasenkohärent und/oder so, dass der Phasensprung beim Wechsel der Frequenzen beim Senden und/oder zum Empfang bekannt ist und/oder ermittelt wird und insbesondere die beim Empfang gemessenen Phasen um diesen Phasensprung oder diese Phasensprünge korrigiert werden, insbesondere vor Bildung der Autokorrelationsmatrix und/oder der aggregierten Autokorrelationsmatrix.

Mit besonderem Vorteil wird also die Kenntnis über den Frequenzsprung beim Wechsel der Frequenz genutzt, um eine einfache Messung bzw. Berechnung zu ermöglichen, beispielswiese zur Korrektur der Messung der Phasen. Bei einem Phasensprung von null, wird auch diese Kenntnis insbesondere genutzt, indem die Messung der Phasen direkt verwendet wird, um eine Entfernung zu berechnen, sie wird sozusagen nur um null korrigiert.

Vorteilhafterweise bleiben wobei bei der Abstandsbestimmung, und somit insbesondere bei der Bildung von Messwertvektoren und Autokorrelationsmatrizen, Signalanteile des ersten und/oder zweiten Objekts bei Frequenzen mit weniger als 40% oder zumindest Signale mit weniger als 20%, insbesondere weniger als 40%, der mittleren Energie der Signale und/oder Signale mit mehr als 140%, insbesondere mehr als 120%, der mittleren Energie unberücksichtigt, werden sie also ausgelassen. Dadurch lassen sich der Einfluss von Störungen und Ungenauigkeiten der verwendeten Elektronikbauteile weiter reduzieren.

Bevorzugt führen eine Vielzahl von Objekten, das Verfahren gemeinsam durch, wobei jeweils die Autokorrelationsmatrizen des Signalaustauschs eines Paares gebildet werden und daraus die Entfernung im Paar berechnet wird, wobei die Autokorrelationsmatrizen eines Empfangs in mehr als einem Paar verwendet werden. Dadurch lässt sich Energie und Zeit einsparen.

Mit Vorteil werden zur Bildung einer Autokorrelationsmatrix des Empfangs an einem Objekt die Autokorrelationsmatrizen des Empfangs an dem Objekt über unterschiedliche Antennenpfade aggregiert, insbesondere aufsummiert.

Abstand und Entfernung werden synonym für die Distanz zwischen zwei Objekten genutzt. Zudem wird der Abstand bzw. die Abstandsberechnung im virtuellen Raum thematisiert, bei der nicht der Abstand zwischen zwei realen Objekten sondern ein Abstand in einem virtuellen Raum bestimmt wird, beispielsweise zwischen einer Autokorrelationsmatrix und einer anderen Matrix. In letzterem Fall wird dann aber auf den virtuellen Raum hingewiesen.

Unter Merkmalen des Signals sind insbesondere Änderungen des Signals zu verstehen, wie Änderung der Amplitude, der Polarisation, der abstrahlenden Antenne (Wechsel zwischen Antennen), der Frequenz und/oder Phase. Es können aber auch aggregierte Gruppen von Merkmalen verwendet werden, die in manchen Situationen die Robustheit des Verfahrens steigern. So können beispielsweise aufmodulierte Pakete oder Syncworte als Gruppen von Merkmalen verwendet werden

Insbesondere verwenden die Objekte in ihrem Frequenzhopping näherungsweise gleiche Frequenzen, wobei die Reihenfolge dieser Frequenzen im Frequenzhopping nicht entscheidend ist. Näherungsweise gleich sind die Frequenzen insbesondere bei einem Unterschied von weniger als 5%, insbesondere weniger als 1%, der niedrigeren Frequenz und/oder weniger als 17 MHz, insbesondere weniger als 10 MHz, insbesondere weniger als 9 MHz, insbesondere weniger als 2 MHz. So kann beispielsweise Objekt A die Frequenzen FA1, FA2 bis FAn und Objekt B die Frequenzen FB1, FB2 bis FBn verwenden, wobei gilt 95% FAx < =FBx < = 105% FAx mit x von 1 bis n
verwenden.

Unter einem Frequenzhopping ist insbesondere das aufeinanderfolgende Senden auf unterschiedlichen Frequenzen zu verstehen.

Insbesondere liegen die Frequenzen, insbesondere des Frequenzhoppings, in einer Spanne von 25 bis 100 MHz, insbesondere überspannen Sie eine solche Spanne vollständig. Insbesondere liegen die Frequenzen, insbesondere des Frequenzhoppings, im Bereich von 2 bis 6 GHz. Insbesondere liegt zwischen benachbarten aber nicht notwendig aufeinanderfolgenden Frequenzen, insbesondere des Frequenzhoppings, ein Abstand im Bereich von 0,1 bis 10 MHz, insbesondere im Bereich von 0,5 bis 10 MHz.

Auf Basis der Kenntnis des Phasensprungs beim bei jedem Frequenzwechsels auf Sender Seite und auf Empfängerseite sowie der Zeitdrift werden insbesondere die Phasenverschiebungen auf Grund der Entfernung (bzw. Phasenlaufzeit) für jede der Frequenzen des Frequenzhoppings bestimmt und mit der jeweiligen empfangenen Amplitude zu einer komplexen Zahl zusammengeführt. Die Messwerte werden in einem Vektor angeordnet und aus diesem Vektor wird eine Autokorrelationsmatrix gebildet. Dies geschieht jeweils für die an einem Objekt empfangenen Signale. Die dadurch gebildeten Autokorrelationsmatrizen, jeweils eine pro Objekt, werden dann paarweise summiert um aus dieser aggregierten Autokorrelationsmatrix eines Paares von Objekten die Entfernung zwischen diesen Objekten zu bestimmen. Dabei werden die Vektoren insbesondere so gebildet, dass bei den Paaren zwischen denen die Entfernung bestimmt wird, die Zeilen oder Spalten des Vektors jeweils einer Frequenz zugeordnet sind und diese Zuordnung zur Erstellung der Vektoren jedes der Paare gleich erfolgt. Bei mehreren Empfangspfaden kann ein solcher Vektor für jeden der Empfangspfade eines Empfangs erstellt und daraus jeweils eine Autokorrelationsmatrix bestimmt werden, die dann für ein Objekt aufsummiert werden.

Mit besonderem Vorteil wechselt das erste und/oder zweite Objekt zwischen mindestens zwei der mehreren Frequenzen phasenkohärent oder wird ein beim Umschalten entstehender Phasensprung am umschaltenden Objekt gemessen oder so gewechselt, dass der Phasensprung bekannt ist und bei der Berechnung berücksichtigt. Der Wechsel wird insbesondere durch Umschalten mindestens einer PLL realisiert. Dadurch lässt sich eine noch robustere und einfachere Entfernungsmessung umsetzen und lassen sich weitere Vorteile bei der Verwendung der Signale dadurch realisieren, dass darauf beruhende Auswertungen vereinfacht werden. Die Korrektur wird insbesondere so geführt, dass die gemessene Phase um den Phasensprung korrigiert wird.

Unter phasenkohärentem Umschalten oder Wechsel zwischen zwei Frequenzen wird insbesondere verstanden, dass die Phase nach der Umschaltung relativ zur Phasenlage vor der Umschaltung bekannt ist. Dies ist der Fall, wenn die Veränderung der Phase beim Umschalten null ist oder einen vorbekannten oder ermittelbaren Wert beträgt. Dadurch lassen sich weitere Messungen der Phase am Sender vermeiden und die Berechnung vereinfachen, insbesondere wenn ohne Phasenveränderung zwischen Frequenzen gewechselt wird. Mit Vorteil schaltet nicht nur das sendende Objekt phasenkohärent sondern auch das empfangene, insbesondere wird in jedem Objekt eine PLL phasenkohärent geschaltet.

Hilfsweise kann bevorzugt aber auch nicht phasenkohärent geschaltet und die Änderung der Phase lokal, insbesondere also beim Sender vor der Übertragung und/oder beim Empfänger bezüglich der PLL des Empfängers, bestimmt werden und diese Änderung in der Berechnung korrigiert werden.

Beispielsweise kann bei Kenntnis des Zeitpunktes des phasenkohärenten Wechsel oder des Wechsels mit gemessenem Phasensprung am sendenden Objekt und bei Bestimmung des Wechsels im empfangenen Signal am empfangenen Objekt die Zeit zwischen Senden und Empfang des Wechsels bestimmt werden, die die Signallaufzeit (ToF) darstellt, und auch die Phasenverschiebung bestimmt werden, die sich allein aus dem Signallauf ergibt. Aus der Signallaufzeit lässt sich mittels der Lichtgeschwindigkeit direkt die Entfernung bestimmten. Über die Phasenverschiebung ist dies, jedoch modulo der Wellenlänge, ebenfalls möglich. Durch Nutzung mehrerer Frequenzen lässt sich die Mehrdeutigkeit bei der phasenbasierten Messung reduzieren. Durch die Kombination der signallaufzeit-(Pulslaufzeit, ToF) und phasenbasierten Messungen (phase based ranging, PBR) lässt sich eine besonders genaue und robuste Entfernungsmessung realisieren.

Unter phasenkohärentem Umschalten zwischen zwei Frequenzen wird insbesondere verstanden, dass der Zeitpunkt des Umschaltens genau bestimmt ist oder gemessen wird und die Phase nach der Umschaltung relativ zur Phasenlage vor der Umschaltung bekannt ist. Dies ist der Fall, wenn die Veränderung der Phase beim Umschalten null ist oder einen vorbekannten Wert beträgt.

Die Signale sind insbesondere Funksignale.

Es wurde zudem überraschend festgestellt, dass die aus der hier beschriebenen einseitigen oder erfindungsgemäßen Entfernungsmessung gewonnene Entfernungen bei der Verwendung handelsüblicher Transceiver wie z.B. der schon etwas ältere cc2500 oder der aktuelle cc26xx von Texas Instruments oder der Kw35/36/37/38 von NXP oder der DA1469x von Dialog abhängig sind von der zur Entfernungsbestimmung verwendeten Frequenz. Dabei scheinen Ungenauigkeiten in den Transceivern auch zu errechneten Entfernungen unterhalb der tatsächlichen Entfernung zu führen, dies aber nur bei solchen Frequenzen, deren Übertragungskanal stark gedämpft ist, sodass diese problemlos bei der Berechnung eliminiert werden können.

Somit ist es vorteilhaft bei der Abstandsbestimmung Signalanteile des Objekts, dessen Signale zur Abstandsbestimmung genutzt werden, teilweise nicht zur Abstandsbestimmung zu nutzen und zwar, solche Anteile nicht zu nutzen, die oberhalb einer Leistungsobergrenze liegen und/oder solche Anteile nicht zu nutzen, die unterhalb einer Leistungsuntergrenze liegen. Diese Grenzen können vorbestimmt sein oder aus den empfangenen Signalen bestimmt werden und insbesondere oberhalb bzw. unterhalb der mittleren Empfangenen Leistung liegen und zwar insbesondere mindestens 20% oberhalb der mittleren Empfangsleistung (Leistungsobergrenze) und/oder mindestens 20% unterhalbe der mittleren Empfangsleistung (Leistungsuntergrenze) liegen.

Bevorzugt werden Signalanteile bei Frequenzen mit weniger als 40% oder zumindest Signale mit weniger als 20%, insbesondere weniger als 40%, der mittleren Energie der Signale und/oder Signale mit mehr als 140%, insbesondere mehr als 120%, der mittleren Energie empfangen wurden, nicht berücksichtigt.

Mit Vorteil liegt die Leistungsuntergrenze im Bereich von 5 bis 50% der mittleren Leistung der empfangenen Signale und/oder die Leistungsobergrenze im Bereich von 120 bis 200% der mittleren Leistung der empfangenen Signale.

In einer anderen Ausgestaltung werden aus den, insbesondere in der Entscheidung ausgewählten, Signalen die x% der Signale mit kleinster empfangener Amplitude aussortiert und nicht verwendet und/oder die y% der Signale mit größter empfangener Amplitude aussortiert und nicht verwendet. Als besonders vorteilhaft hat es sich erwiesen, wenn die Summe aus x und y 10 nicht unterschreitet und/oder 75 nicht überschreitet und/oder x im Bereich von 10 bis 75 und/oder y im Bereich von 20 bis 50 liegt. Mit diesen Werten lässt sich in den meisten Situationen eine hohe Genauigkeit und eine zuverlässige Abstandsbestimmung erreichen.

Mit Vorteil sendet das zweite oder, insbesondere exklusives oder, erste Objekt keine Signale zur Entfernungsbestimmung und/oder sendet das zweite oder das erste Objekt, insbesondere exklusives oder, Signale nur zur Zeit- und/oder Taktsynchronisation sendet. Dadurch lässt sich Energie und Verfahrenszeit einsparen.

Bevorzugt sendet das erste und/oder zweite oder jedes der zwei Objekte die Signale auf mehreren Frequenzen nacheinander und/oder aufeinanderfolgend, insbesondere unmittelbar aufeinanderfolgend. Insbesondere werden beim Senden durch erstes und zweites Objekt zunächst alle Signale des ersten oder zweiten Objekts und anschließend die des anderen gesendet. Arbeitet man mit mehreren Objekten, senden sie insbesondere alle nacheinander, insbesondere jeweils ein Frequenzhopping. Dadurch lassen sich unter anderem Einflüsse von Umgebungs- oder Entfernungsänderungen und von Bewegungen eines oder beider Objekte reduzieren.

Mit Vorteil übersteigt die Bandbreite der Signale zu keiner Zeit 50 MHz, insbesondere 25 MHz. Dadurch lässt sich Energie einsparen, lassen sich Störungen anderer Prozesse vermeiden und gegenüber breitbandigen Verfahren einfache Bauteile nutzen.

Bevorzugt wird vor, nach und/oder während der Durchführung des Verfahrens mindestens eine Zeit- und/oder Taktsynchronisation und/oder -korrektur zwischen den zwei Objekten durchgeführt. Dies erhöht die Genauigkeit des Verfahrens. Bevorzugt wird auch eine Drift der Uhr des ersten und/oder zweiten Objekts oder einen Unterschied in der Drift der Uhren des ersten und des zweiten Objekts bestimmt und bei der Abstandsbestimmung berücksichtigt. Dies erhöht die Genauigkeit des Verfahrens.

Mit Vorteil wird das Verfahren so geführt, dass der Frequenzabstand zwischen zwei aufeinander folgenden der mehreren Frequenzen mindestens 0,1 MHz und/oder maximal 10 MHz beträgt und/oder die mehreren Frequenzen mindestens fünf Frequenzen und/oder maximal 200 Frequenzen darstellen und/oder wobei die mehren Frequenzen ein Frequenzband von mindestens zwei MHz und/oder maximal 100 MHz überspannen. Dadurch lässt sich ein ausgewogenes Maß zwischen Bandbreitenerfordernis, welches Anforderungen an verfügbare Frequenzen und Hardware stellt, und Genauigkeit finden.

Bevorzugt wird das Verfahren so geführt oder die aggregierten Autokorrelationsmatrix so verwendet, dass die Genauigkeit der Abstandsbestimmung im Bereich von 0,3 m bis 3 m liegt, insbesondere zumindest für Abstände im Bereich von 0 bis 50 m. In diesen Bereichen kommen die Vorteile der Erfindung besonders deutlich zum Tragen

Es wird bevorzugt, bekannte hochauflösende Methoden, wie beispielsweise MUSIC oder CAPON, anzuwenden, die auf Basis einer, insbesondere komplexen, Autokorrelationsmatrix eine Entfernung berechnen können. Mit Vorteil wird für jedes am zweiten und/oder ersten Objekt empfangene Signal, das nicht unberücksichtigt bleiben soll, ein zu dessen Amplitude proportionalen Wert und ein Phasenwert bestimmt und insbesondere daraus, gegebenenfalls nach Korrektur eines Phasensprungs beim Frequenzwechsels oder eines bestimmbaren Phasenmessfehlers auf Grund von Drift der Zeitgeber oder Frequenzgeber, jeweils eine komplexe Zahl bestimmt, aus denen mindestens ein Messwertvektor aufgebaut wird, aus dem jeweils eine Autokorrelationsmatrix erstellt wird. Insbesondere werden die Autokorrelationsmatrizen eines Objektes, insbesondere solche des Empfangs eines Frequenzhoppings eines anderen Objekts aufsummiert. Insbesondere werden wird die, ggf. aufsummierte, Autokorrelationsmatrix des Empfangs des Frequenzhoppings des Objekts X am Objekt Y mit der, ggf. aufsummierten, Autokorrelationsmatrix des Empfangs des Frequenzhoppings des Objekts Y am Objekt X aggregiert, insbesondere summiert und diese aggregierte Autokorrelationsmatrix für die Entfernungsbestimmung zwischen Objekt X und Y genutzt.

Insbesondere wird die aggregierte Autokorrelationsmatrix genutzt, um mittels bekannter Methoden, beispielsweise MUSIC, CAPON, Vergleich mit, Abstandsberechnung im virtuellen Raum zu und/oder Projektion auf Abstrahl- und- oder Empfangscharakteristika, die Entfernung bestimmt. Mit Vorteil erfolgt die Abstandsberechnung im virtuellen Raum mittels Eigenwert oder Eigenvektorenbestimmung der mindestens einen Autokorrelationsmatrix und/oder Fouriertransformation der komplexen Werte.

Derartige Vorgehensweisen sind insbesondere bei Multipath-Signalausbreitung vorteilhaft, um eine zuverlässige Bestimmung zu erreichen.

Mit Vorteil wird aus mehreren Abstandsbestimmungen ein Mittelwert und/oder werden die Messungen gemittelt um einen Abstandswert zu bestimmen.

Wenn eine Ortung angestrebt wird, ist es vorteilhaft das erfindungsgemäße Verfahren zwischen einer Mehrzahl von Paaren von Objekten durchzuführen, wobei insbesondere ein Objekt jedes Paares ein Objekt ist, dass an allen Paaren beteiligt ist, und wobei die ermittelten Abstände der Paare benutzt werden, um eine Kartierung und/oder Positionsbestimmung mindestens eines der Objekte durchzuführen. Insbesondere ist es vorteilhaft diese paarweisen Messungen dann gleichzeitig zu machen, wobei nicht gleichzeitig gesendet wird, sondern alle Objekte mindestens ein Frequenzhopping, insbesondere unmittelbar aufeinander folgend durchführen.

Gelöst wird die Aufgabe auch durch ein oder zwei Objekte, jeweils eingerichtet mit Sende- und Empfangsmitteln und einer Steuerung, eingerichtet zur Durchführung des erfindungsgemäßen Verfahrens.

Mit Vorteil sind die Objekte Teile eines Datenübertragungssystems, insbesondere eines Bluetooth, WLAN oder Mobilfunk Datenübertragungssystems. Bevorzugt sind die Signale Signale des Datenübertragungssystems, insbesondere eines Datenübertragungsstandards, beispielsweise Mobilfunkstandard, WLAN oder Bluetooth, die zur Datenübertragung gemäß des Datenübertragungsstandards genutzt werden.

Vorteilhafterweise werden die Signale über mehrere Antennenpfade, insbesondere mindestens drei, übertragen, insbesondere mit mehreren Antennen, insbesondere nacheinander, am sendenden Objekt gesendet und/oder mit mehreren Antennen am empfangenen Objekt empfangen.

Die Berechnung erfolgt beispielsweise wie folgt: Es werden bei der Mittelung der gemessenen Entfernungen die Messungen der empfangenen Signale mit weniger als z.B. 40% der mittleren Energie der empfangenen Signale ignoriert. Damit werden Messungen auf Frequenzen mit stark gedämpftem Übertragungskanal ausgeklammert.

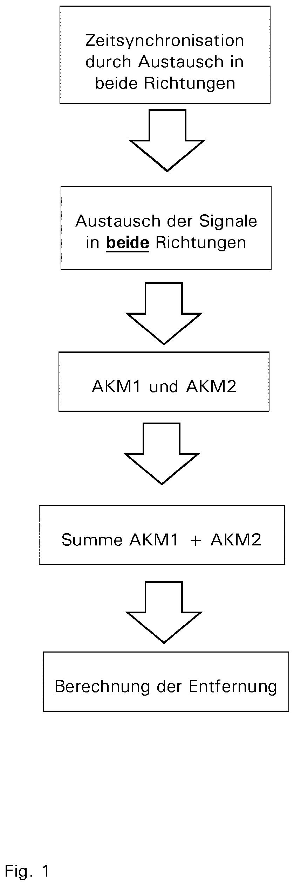

Figur 1 zeigt rein schematisch und nicht beschränkend und nur exemplarisch einen möglichen Verfahrensablauf. Zunächst erfolgt eine Zeitsynchronisation zwischen zwei Objekten und eine Einstellung der Oszillatoren an den zwei Objekten. Sodann führen beide Objekte ein Frequenzhopping durch. Dies erfolgt nacheinander während jeweils das andere Objekt die gesendeten Signale empfängt. Auf Basis der Kenntnis des Phasensprungs beim bei jedem Frequenzwechsels auf Sender Seite und auf Empfängerseite sowie der Zeitdrift werden die Phasenverschiebungen auf Grund der Entfernung (bzw. Phasenlaufzeit) für jede der Frequenzen des Frequenzhoppings bestimmt und mit der jeweiligen empfangenen Amplitude zu einer komplexen Zahl zusammengeführt. Die Messwerte werden in einem Vektor angeordnet und aus diesem Vektor wird eine Autokorrelationsmatrix gebildet. Dies geschieht jeweils für die an einem Objekt empfangenen Signale. Die dadurch gebildeten Autokorrelationsmatrizen, jeweils eine pro Objekt, werden dann paarweise summiert um aus dieser aggregierten Autokorrelationsmatrix eines Paares von Objekten die Entfernung zwischen diesen Objekten zu bestimmen.

## Patentansprüche

1. Verfahren zur Abstandsbestimmung zwischen mindestens zwei Objekten, wobei die mindestens zwei Objekte zeit- und/oder taktsynchronisiert sind und/oder werden und wobei ein erstes und zweites der mindestens zwei Objekte auf mehreren Frequenzen Signale abstrahlen und ein zweites und ein erstes der zwei Objekte die Signale des jeweils anderen Objekts empfangen und daraus die Entfernung zwischen erstem und zweitem Objekt bestimmt wird, **dadurch gekennzeichnet, dass** das Verfahren die Bildung einer ersten Autokorrelationsmatrix der Messungen an den am zweiten Objekt empfangenen Signalen des ersten Objekts und die Bildung einer zweiten Autokorrelationsmatrix der Messungen an den am ersten Objekt empfangenen Signalen des zweiten Objekts sowie die Aggregation der ersten und zweiten Autokorrelationsmatrix zu einer aggregierten Autokorrelationsmatrix, insbesondere durch Summenbildung, beinhaltet und dass auf Basis der aggregierten Autokorrelationsmatrix die Entfernung zwischen erstem und zweitem Objekt berechnet wird.

2. Verwendung einer aus mindestens zwei Autokorrelationsmatrizen aggregierten, insbesondere aufsummierten, Autokorrelationsmatrix zur Bestimmung einer Entfernung zwischen zwei Objekten, wobei jedes der Objekte auf mehreren Frequenzen Signale abstrahlt und das jeweils andere diese empfängt und aus den Messungen von Phase und Amplitude oder Phase und Leistung mindestens ein komplexer Vektor des Empfangs jedes Objekts erstellt wird und aus dem mindestens einen komplexen Vektor jedes Objekts eine der mindestens zwei Autokorrelationsmatrizen erstellt wird.

3. Verfahren nach Anspruch 1 oder Verwendung nach Anspruch 2, wobei das erste und/oder zweite Objekt zwischen mindestens zwei der mehreren Frequenzen phasenkohärent wechselt und/oder so wechselt, dass der Phasensprung beim Wechsel der Frequenzen beim Senden bekannt ist und/oder ermittelt wird und insbesondere die beim Empfang gemessenen Phasen um diese Phasensprung korrigiert werden, insbesondere vor Bildung der Autokorrelationsmatrix und/oder der aggregierten Autokorrelationsmatrix.

4. Verfahren oder Verwendung nach einem der vorstehenden Ansprüche, wobei bei der Abstandsbestimmung Signalanteile des ersten und/oder zweiten Objekts bei Frequenzen mit weniger als 40% oder zumindest Signale mit weniger als 20%, insbesondere weniger als 40%, der mittleren Energie der Signale und/oder Signale mit mehr als 140%, insbesondere mehr als 120%, der mittleren Energie unberücksichtigt bleiben.

5. Verfahren oder Verwendung nach einem der vorstehenden Ansprüche, wobei eine Vielzahl von Objekten das Verfahren gemeinsam durchführen und jeweils die Autokorrelationsmatrizen des Signalaustauschs eines Paares gebildet werden und daraus die Entfernung im Paar berechnet wird, wobei die Autokorrelationsmatrizen eines Empfangs in mehr als einem Paar verwendet werden.

6. Verfahren oder Verwendung nach einem der vorstehenden Ansprüche, wobei zur Bildung einer Autokorrelationsmatrix des Empfangs an einem Objekt die Autokorrelationsmatrizen des Empfangs an dem Objekt über unterschiedliche Antennenpfade aggregiert, insbesondere aufsummiert werden.

7. Verfahren nach einem der vorstehenden Ansprüche, wobei das erste und/oder zweite der zwei Objekte die Signale auf mehreren Frequenzen nacheinander und/oder aufeinanderfolgend, insbesondere unmittelbar aufeinanderfolgend, abstrahlt und/oder wobei die Bandbreite der Signale zu keiner Zeit 50 MHz, insbesondere 25 MHz, übersteigt.

8. Verfahren oder Verwendung nach einem der vorstehenden Ansprüche, wobei vor, nach und/oder während der Durchführung des Verfahrens mindestens eine Zeit- und/oder Taktsynchronisation und/oder - korrektur zwischen den zwei Objekten durchgeführt wird.

9. Verfahren oder Verwendung nach einem der vorstehenden Ansprüche, wobei der Frequenzabstand zwischen zwei aufeinander folgenden der mehreren Frequenzen mindestens 0,1 MHz und/oder maximal 10 MHz beträgt und/oder die mehreren Frequenzen mindestens fünf Frequenzen und/oder maximal 200 Frequenzen darstellen und/oder wobei die mehren Frequenzen ein Frequenzband von mindestens zwei MHz und/oder maximal 100 MHz überspannen.

10. Verfahren oder Verwendung nach einem der vorstehenden Ansprüche, wobei die Abstandsbestimmung auf Ermittlung der Signallaufzeit vom ersten zum zweiten oder vom zweiten zum ersten Objekt beruht und/oder wobei die Abstandsbestimmung auf Ermittlung der Phasenverschiebung der Signale vom ersten zum zweiten oder vom zweiten zum ersten Objekt beruht.

11. Verfahren oder Verwendung nach einem der vorstehenden Ansprüche, wobei eine Zeitdrift mindestens eines der beiden Objekte bestimmt und/oder korrigiert wird und/oder bei der Berechnung des Abstandes berücksichtigt wird, insbesondere im Rahmen einer Korrektur der am empfangenen Signal gemessenen Phasen insbesondere vor Bildung der Autokorrelationsmatrix und/oder der aggregierten Autokorrelationsmatrix.

12. Verfahren oder Verwendung nach einem der vorstehenden Ansprüche, wobei ein Mittelwert aus mehreren Abstandsbestimmungen ermittelt wird.

13. Verfahren oder Verwendung nach einem der vorstehenden Ansprüche, wobei bei der Abstandsbestimmung am zweiten oder ersten Objekt empfangene Signale mit einer empfangenen Leistung unterhalb einer vorbestimmten und/oder, insbesondere aus oder unter Berücksichtigung der empfangenen Signale, ermittelten Leistungsuntergrenze unberücksichtigt bleiben, insbesondere solche Signale unberücksichtigt bleiben, die mehr als 50% unter der mittleren Leistung der empfangenen Signale liegen und/oder wobei bei der Abstandsbestimmung am zweiten oder ersten Objekt empfangene Signale mit einer Leistung oberhalb einer vorbestimmten und/oder, insbesondere aus oder unter Berücksichtigung der empfangenen Signale, ermittelten Leistungsobergrenze unberücksichtigt bleiben.

14. Verfahren oder Verwendung nach einem der vorstehenden Ansprüche, wobei das Verfahren nach einem der vorstehenden Verfahren zwischen einer Mehrzahl von Paaren von Objekten durchgeführt, wird, wobei insbesondere ein Objekt jedes Paares ein Objekt ist, dass an allen Paaren beteiligt ist, und wobei die ermittelten Abstände der Paare benutzt werden, um eine Kartierung und/oder Positionsbestimmung durchzuführen.

15. Mindestens zwei Objekte, insbesondere Objektpaar, eingerichtet zur Durchführung des Verfahrens nach einem der vorstehenden Ansprüche.

## Claims

1. A method for determining the distance between at least two objects, wherein said at least two objects are and/or become time and/or clock synchronised and wherein a first and a second of said at least two objects emit signals at several frequencies and a second and a first of the two objects receive the signals of the respective other object and the distance between the first and second object is determined therefrom, **characterised in that in that** the method includes the formation of a first autocorrelation matrix of the measurements on the signals of the first object received at the second object and the formation of a second autocorrelation matrix of the measurements on the signals of the second object received at the first object and the aggregation of the first and second autocorrelation matrices to form an aggregated autocorrelation matrix, in particular by summation, and **in that** the distance between the first and second object is calculated on the basis of the aggregated autocorrelation matrix.

2. The use of an autocorrelation aggregated, in particular summed matrix, from at least two autocorrelation matrices to determine a distance between two objects, wherein each of the objects emits signals at several frequencies and the other receives them and at least one complex vector of the reception of each object is created from the measurements of phase and amplitude or phase and power and from which at least one complex vector of the reception of each object is calculated.

3. The method according to claim 1 or use according to claim 2, wherein the first and/or second object changes phase-coherently between at least two of the plurality of frequencies and/or changes such that the phase jump when the frequencies change during transmission is known and/or determined and, in particular, the phases measured during reception are corrected for this phase jump, in particular before forming the autocorrelation matrix and/or the aggregated autocorrelation matrix.

4. The method or use according to one of the preceding claims, wherein signal components of the first and/or second object at frequencies with less than 40% or at least signals with less than 20%, in particular less than 40%, of the mean energy of the signals and/or signals with more than 140%, in particular more than 120%, of the mean energy are not taken into account when determining the distance.

5. The method or use according to one of the preceding claims, wherein a plurality of objects performs the method together and in each case the autocorrelation matrices of the signal exchange of a pair are formed and the distance in the pair is calculated therefrom, wherein the autocorrelation matrices of a reception are used in more than one pair.

6. The method or use according to one of the preceding claims, wherein to form an autocorrelation matrix of the reception at an object, the autocorrelation matrices of the reception at the object are aggregated, in particular totalled, over different antenna paths.

7. The method according to one of the preceding claims, wherein the first and/or second of the two objects radiates the signals at a plurality of frequencies in succession and/or consecutively, in particular directly consecutively, and/or wherein the bandwidth of the signals does not exceed 50 MHz, in particular 25 MHz, at any time.

8. The method or use according to one of the preceding claims, wherein at least one time and/or clock synchronisation and/or correction is carried out between the two objects before, after and/or during the implementation of the method.

9. The method or use according to one of the preceding claims, wherein the frequency spacing between two successive ones of the plurality of frequencies is at least 0.1 MHz and/or at most 10 MHz and/or wherein the plurality of frequencies represents at least five frequencies and/or at most 200 frequencies and/or wherein the plurality of frequencies spans a frequency band of at least two MHz and/or at most 100 MHz.

10. The method or use according to one of the preceding claims, wherein the distance determination is based on determination of the signal propagation time from the first to the second or from the second to the first object and/or wherein the distance determination is based on determination of the phase shift of the signals from the first to the second or from the second to the first object.

11. The method or use according to one of the preceding claims, wherein a time drift of at least one of the two objects is determined and/or corrected and/or taken into account in the calculation of the distance, in particular in the context of a correction of the phases measured on the received signal, in particular before forming the autocorrelation matrix and/or the aggregated autocorrelation matrix.

12. The method or use according to one of the preceding claims, wherein an average value is determined from a plurality of distance determinations.

13. The method or use according to one of the preceding claims, wherein signals received during the distance determination at the second or first object with a received power below a predetermined lower power limit and/or, in particular, determined from or taking into account the received signals, are not taken into account, in particular signals which are more than 50% below the average power of the received signals are not taken into account and/or signals received at the second or first object with a power above a predetermined upper power limit and/or, in particular, determined from or taking into account the received signals, are not taken into account when determining the distance.

14. The method or use according to one of the preceding claims, wherein the method according to one of the preceding methods is performed between a plurality of pairs of objects, wherein in particular one object of each pair is an object participating in all pairs, and wherein the determined distances of the pairs are used to perform a mapping and/or position determination.

15. At least two objects, in particular pairs of objects, arranged for carrying out the method according to one of the preceding claims.

## Revendications

1. Procédé de détermination de la distance entre au moins deux objets, dans lequel lesdits au moins deux objets sont et/ou deviennent synchronisés en temps et/ou en horloge et dans lequel un premier et un second desdits au moins deux objets émettent des signaux à plusieurs fréquences et un second et un premier des deux objets reçoivent les signaux de l'autre objet respectif et la distance entre le premier et le second objet est déterminée à partir de là, **caractérisé en ce que** le procédé comprend la formation d'une première matrice d'autocorrélation des mesures sur les signaux du premier objet reçus au second objet et la formation d'une second matrice d'autocorrélation des mesures sur les signaux du second objet reçus au premier objet et l'agrégation des première et seconde matrices d'autocor-rélation pour former une matrice d'autocorrélation agrégée, en particulier par sommation, et **en ce que** la distance entre le premier et le second objet est calculée sur la base de la matrice d'autocorrélation agrégée.

2. Utilisation d'une matrice d'autocorrélation agrégée, en particulier additionnée, à partir d'au moins deux matrices d'autocorrélation pour déterminer une distance entre deux objets, dans laquelle chacun des objets émet des signaux à plusieurs fréquences et l'autre les reçoit, et au moins un vecteur complexe de la réception de chaque objet est créé à partir des mesures de phase et d'amplitude ou de phase et de puissance et à partir duquel au moins un vecteur complexe de la réception de chaque objet est calculé.

3. Procédé selon la revendication 1 ou utilisation selon la revendication 2, dans lequel le premier et/ou le second objet change de manière cohérente en phase entre au moins deux de la pluralité de fréquences et/ou change de manière à ce que le saut de phase lorsque les fréquences changent pendant la transmission soit connu et/ou déterminé et, en particulier, que les phases mesurées pendant la réception soient corrigées pour ce saut de phase, en particulier avant de former la matrice d'autocorrélation et/ou la matrice d'autocorrélation agrégée.

4. Procédé ou utilisation selon l'une des revendications précédentes, dans lequel les composantes du signal du premier et/ou du second objet à des fréquences inférieures à 40% ou au moins les signaux ayant moins de 20%, en particulier moins de 40%, de l'énergie moyenne des signaux et/ou les signaux ayant plus de 140%, en particulier plus de 120%, de l'énergie moyenne ne sont pas pris en compte lors de la détermination de la distance.

5. Procédé ou utilisation selon l'une des revendications précédentes, dans lequel plusieurs objets exécutent le procédé ensemble et, dans chaque cas, les matrices d'autocorrélation de l'échange de signaux d'une paire sont formées et la distance dans la paire est calculée à partir de celles-ci, les matrices d'autocorrélation d'une réception étant utilisées dans plus d'une paire.

6. Procédé ou utilisation selon l'une des revendications précédentes, dans lequel, pour former une matrice d'autocorrélation de la réception au niveau d'un objet, les matrices d'autocor-rélation de la réception au niveau de l'objet sont agrégées, en particulier totalisées, sur différents trajets d'antenne.

7. Procédé selon l'une des revendications précédentes, dans lequel le premier et/ou le second des deux objets émet les signaux à une pluralité de fréquences successivement et/ou consécutivement, en particulier directement consécutivement, et/ou dans lequel la largeur de bande des signaux ne dépasse pas 50 MHz, en particulier 25 MHz, à tout moment.

8. Procédé ou utilisation selon l'une des revendications précédentes, dans lequel au moins une synchronisation et/ou correction du temps et/ou de l'horloge est effectuée entre les deux objets avant, après et/ou pendant la mise en oeuvre du procédé.

9. Procédé ou utilisation selon l'une des revendications précédentes, dans lequel l'écart de fréquence entre deux fréquences successives de la pluralité de fréquences est d'au moins 0,1 MHz et/ou d'au plus 10 MHz et/ou dans lequel la pluralité de fréquences représente au moins cinq fréquences et/ou au plus 200 fréquences et/ou dans lequel la pluralité de fréquences couvre une bande de fréquence d'au moins deux MHz et/ou d'au plus 100 MHz.

10. Procédé ou utilisation selon l'une des revendications précédentes, dans lequel la détermination de la distance est basée sur la détermination du temps de propagation du signal du premier au second ou du second au premier objet et/ou dans lequel la détermination de la distance est basée sur la détermination du déphasage des signaux du premier au second ou du second au premier objet.

11. Procédé ou utilisation selon l'une des revendications précédentes, dans lequel une dérive temporelle d'au moins un des deux objets est déterminée et/ou corrigée et/ou prise en compte dans le calcul de la distance, notamment dans le cadre d'une correction des phases mesurées sur le signal reçu, en particulier avant de former la matrice d'autocorrélation et/ou la matrice d'autocorrélation agrégée.

12. Procédé ou utilisation selon l'une des revendications précédentes, dans lequel une valeur moyenne est déterminée à partir d'une pluralité de déterminations de la distance.

13. Procédé ou utilisation selon l'une des revendications précédentes, dans lequel les signaux reçus lors de la détermination de la distance au niveau du second ou du premier objet avec une puissance reçue inférieure à une limite de puissance inférieure prédéterminée et/ou, en particulier, déterminée à partir des signaux reçus ou en tenant compte de ceux-ci, ne sont pas pris en compte, en particulier les signaux qui sont inférieurs de plus de 50 % à la puissance moyenne des signaux reçus ne sont pas pris en compte et/ou les signaux reçus au niveau du second ou du premier objet avec une puissance supérieure à une limite de puissance supérieure prédéterminée et/ou, en particulier, déterminée à partir des signaux reçus ou en tenant compte de ceux-ci, ne sont pas pris en compte lors de la détermination de la distance.

14. Procédé ou l'utilisation selon l'une des revendications précédentes, dans lequel le procédé selon l'une des méthodes précédentes est exécutée entre plusieurs paires d'objets, dans lequel en particulier un objet de chaque paire est un objet participant à toutes les paires, et dans lequel les distances déterminées des paires sont utilisées pour effectuer une cartographie et/ou une détermination de la position.

15. Au moins deux objets, en particulier des paires d'objets, agencés pour la mise en oeuvre du procédé selon l'une des revendications précédentes.
